# FASCICULE DE BREVET EUROPEEN

(11) **EP 3 538 568 B1**
(45) Date de publication et mention de la délivrance du brevet: **07.06.2023**
(21) Numéro de dépôt: 17808541.1
(22) Date de dépôt: 08.11.2017
(51) Int. Cl.: C08F 122/02, B02C 23/04, C08F 8/44, C09C 1/36, C09C 1/42, C09C 3/04, C09C 3/10, C09C 1/02, C09C 1/30

(54) **MÉTHODE DE BROYAGE DE MINÉRAUX EN PRÉSENCE D'UN POLY(ITACONATE)**
VERFAHREN ZUM FRÄSEN VON MINERALIEN IN ANWESENHEIT EINES POLY(ITACONATS)
METHOD OF MILLING MINERALS IN THE PRESENCE OF A POLY(ITACONATE)

(30) Priorité: 14.11.2016 FR 1660970
(43) Date de publication de la demande: 18.09.2019
(73) Titulaire: Coatex, 69730 Genay (FR)
(72) Inventeur: GRONDIN, Henri, 69580 Sathonay-Village (FR); JACQUEMET, Christian, 69005 Lyon (FR); MAGNY, Benoît, 69270 Cailloux-sur-Fontaines (FR)
(74) Mandataire: Balmefrezol, Ludovic Francis Pierre
(86) Numéro de dépôt international: PCT/FR2017/053043
(87) Numéro de publication internationale: WO 2018/087469

(56) Documents cités:
- EP-A1- 2 143 688
- WO-A1-2017/023968
- US-A- 5 573 188
- US-B1- 9 487 423

## Description

L'invention concerne une méthode de préparation de particules de matière minérale comprenant le broyage, en présence d'eau, d'au moins une matière minérale. Le broyage selon l'invention est réalisé en présence d'au moins un polymère obtenu par une réaction de polymérisation radicalaire d'un sel partiel de sodium d'acide itaconique et décarboxylation partielle du polymère obtenu puis neutralisation partielle ou totale du polymère décarboxylé. L'invention concerne également une composition aqueuse comprenant des particules de matière minérale broyée et un tel polymère, en particulier une composition de charge de masse pour la préparation de papier ou une composition de sauce de couchage de papier.

On connaît des méthodes de broyage de matière minérale, notamment pour le broyage de matières minérales utilisées dans l'industrie papetière. En particulier, on connaît des méthodes de broyage de matière minérale qui mettent en oeuvre des agents d'aide au broyage, notamment des polymères issus de monomères insaturés comprenant une ou plusieurs fonctions acides carboxyliques. Ces agents d'aide au broyage permettent de contrôler la rhéologie de la suspension lors de l'opération de broyage. Généralement, ces agents d'aide au broyage permettent de réduire autant que possible la limite d'écoulement de la suspension de charge minérale à broyer tout en maintenant un niveau de viscosité élevé durant l'opération de broyage.

De manière générale, les méthodes de broyage de matière minérale doivent être efficaces et permettre de contrôler la granulométrie des particules obtenues.

De plus, les méthodes de broyage de matière minérale doivent avoir une efficacité élevée en termes de durée de broyage pour une granulométrie particulière pour une quantité définie de matière minérale. En effet, pour la préparation d'une quantité définie de particules minérales de granulométrie particulière, un temps d'utilisation réduit des installations de broyage permet une amélioration du rendement global de la méthode de broyage.

De même, il est important de disposer de méthodes de broyage de matière minérale qui permettent de préparer des suspensions aqueuses de particules de matière minérale qui soient stables peu après le broyage mais également plusieurs heures ou plusieurs jours après le broyage. Les phénomènes de dérive de la viscosité doivent être contrôlés car ils peuvent conduire à une gélification des suspensions préparées qui en rendrait la manipulation difficile voire impossible. De même, les phénomènes de sédimentation des particules doivent être évités ou fortement ralentis.

Outre le contrôle de la stabilité, le contrôle de la viscosité des suspensions aqueuses de particules de matière minérale broyée est également essentiel.

Il est également important de pouvoir préparer des suspensions aqueuses de particules de matière minérale possédant un extrait sec élevé. Un extrait sec élevé de ces suspensions aqueuses de particules de matière minérale permet notamment d'augmenter la productivité des procédés qui utilisent ces suspensions.

De plus, d'un point de vue environnemental, il est important de pouvoir disposer d'agents d'aide au broyage préparés à partir de réactifs d'origine naturelle, en particulier de réactifs d'origine végétale.

Par ailleurs, lors de la fabrication du papier, des compositions aqueuses de charge minérale sont utilisées pour apporter une charge minérale au sein de la pulpe comprenant de l'eau et des fibres d'origine végétale, en particulier des fibres de matière cellulosique. Au sein de ces compositions, la charge minérale est sous la forme de particules. L'utilisation de telles charges minérales permet notamment d'améliorer les propriétés physiques du papier, en particulier d'améliorer ses propriétés optiques, ou bien de réduire la quantité relative de matière cellulosique par rapport à la quantité de charge minérale.

L'amélioration de l'efficacité des procédés de fabrication de papier est également permise grâce à l'utilisation de ces charges minérales.

Afin d'améliorer l'utilisation de ces compositions de charge minérale lors de la fabrication du papier, plus particulièrement de retenir ces charges minérales dans le matelas fibreux lors de la fabrication de la feuille de papier, il est connu d'utiliser des composés cationiques, en particulier des amidons cationiques ou des copolymères d'acrylamide cationiques. Ces composés cationiques ou agents cationiques de rétention de charge minérale permettent notamment d'augmenter la rétention des charges minérales sur les fibres ou fibrilles d'origine végétale lors de la fabrication du papier. En particulier, grâce à la neutralisation des charges portées par les particules de charge minérale, ces agents de rétention cationiques permettent la formation de coagulâts cationiques retenus par les fibres ou fibrilles d'origine végétale. Ces composés cationiques permettent également d'améliorer la phase d'égouttage lors de la fabrication du papier au cours de laquelle la quantité la plus importante possible de charge minérale doit être retenue dans le matelas fibreux de la feuille de papier. Enfin, ces composés cationiques permettent également d'améliorer les propriétés, notamment les propriétés optiques, du papier fabriqué. Par ailleurs, ces composés cationiques permettent également de limiter la perte de matière cellulosique sous la forme de particules fines. Ainsi, de manière habituelle lors de la fabrication du papier, des composés cationiques sont mis en oeuvre, notamment des agents cationiques tels que des agents floculants cationiques, des agents coagulants cationiques ou des agents cationiques de rétention de charge minérale ou de matière cellulosique.

La réduction de la valeur absolue de la charge Mütek ou de la demande cationique d'une suspension de particules de matière minérale dans l'eau doit également être recherchée.

La demande cationique peut être déterminée à l'aide d'un appareil de mesure du courant d'écoulement de la suspension de charge minérale (détecteur de courant d'écoulement ou *streaming current detector*). Cette mesure de courant d'écoulement peut être réalisée à l'aide d'un appareil Mütek par coulée de polyDADMAC jusqu'à neutralisation des charges électriques de la suspension de charge minérale. On obtient alors une valeur de la charge Mütek de la suspension de charge minérale.

Lors de la fabrication du papier, on cherche généralement à augmenter la quantité relative de charge minérale par rapport à la quantité de matière cellulosique conduisant alors à une augmentation de la quantité d'agents cationiques mis en oeuvre. La diminution de la quantité nécessaire de ces agents cationiques est donc recherchée tout en maintenant l'efficacité des méthodes de fabrication de papier.

Les suspensions de charge minérale utilisées lors de la fabrication du papier devraient également permettre d'améliorer l'épair du papier pour une quantité définie de charge minérale utilisée.

La formation de flocs de particules de charge minérale ou de fibres perturbant la qualité du papier doit également être limitée.

Améliorer la compatibilité des différents composés utilisés lors de la préparation du papier doit également être recherché.

Le document EP 2143688 divulgue un procédé de fabrication d'une suspension de carbonate de calcium mettant en oeuvre un polymère acrylique qui est différent de l'acide itaconique. Le document US 9487423 décrit une méthode de préparation d'un polymère d'acide itaconique partiellement décarboxylé. Le document US 5573188 concerne une méthode de broyage de carbonate de calcium en présence d'un polymère acide différent de l'acide itaconique.

Ainsi, bien qu'il existe des procédés de broyage humide de matière minérale qui mettent en oeuvre des polymères comme agent d'aide au broyage, les procédés de l'état de la technique ne permettent pas toujours d'apporter de solution satisfaisante aux problèmes rencontrés. Il existe donc un besoin de disposer de procédés améliorés de broyage de matière minérale dans l'eau.

La méthode selon l'invention permet d'apporter une solution à tout ou partie des problèmes des méthodes de l'état de la technique.

Ainsi, l'invention fournit une méthode de préparation de particules de matière minérale comprenant le broyage, en présence d'eau, d'au moins une matière minérale en présence d'au moins un polymère obtenu :
(a) par une réaction de polymérisation radicalaire en présence d'hypophosphite de sodium, à une température supérieure à 50°C, d'un sel partiel de sodium d'acide itaconique et décarboxylation partielle du polymère obtenu puis
(b) neutralisation partielle ou totale du polymère décarboxylé résultant de l'étape (a), au moyen d'un dérivé comprenant du sodium.

Lors de la méthode de broyage selon l'invention, la matière minérale mise en oeuvre peut se présenter sous différentes formes, notamment sous la forme de grains de taille grossière issus de blocs ou de morceaux de matière minérale concassée. Lors du broyage selon l'invention, la taille des blocs de matière minérale ou des morceaux de matière minérale mis en oeuvre est réduite jusqu'à obtenir des particules. La méthode selon l'invention est particulièrement efficace pour contrôler la taille des particules préparées lors du broyage de la matière minérale.

Pour la méthode selon l'invention, la taille des particules est définie par leur diamètre médian d₅₀ pour lequel au moins la moitié d'une population de particules a une taille inférieure à une valeur donnée. Ainsi, les particules ayant une taille inférieure à 50 µm sont des particules dont au moins la moitié en poids d'entre elles ont un diamètre inférieur à 50 µm.

De manière préférée, la méthode selon l'invention concerne la préparation de particules dont la taille est inférieure à 50 µm ou bien dont la taille va de 0,05 à 50 µm.

De manière plus préférée, la méthode selon l'invention concerne la préparation de particules de matière minérale dont la taille est inférieure à 10 µm, ou encore inférieure à 5 µm ou à 2 µm. Plus préférentiellement, la taille des particules de matière minérale est inférieure à 1 µm ou inférieure à 0,5 µm.

De manière également préférée pour la méthode selon l'invention, au moins 50 % en poids des particules ont une taille allant de 0,5 à 50 µm ou bien une taille inférieure à 10 µm. En particulier, au moins 50 % en poids des particules ont une taille inférieure à 5 µm ou à 2 µm, voire inférieure à 1 µm.

De manière avantageuse pour la méthode selon l'invention, au moins 60 % en poids des particules ont une taille allant de 0,5 à 50 µm ou bien une taille inférieure à 10 µm. En particulier, au moins 60 % en poids des particules ont une taille inférieure à 5 µm ou à 2 µm, voire inférieure à 1 µm.

De manière également avantageuse pour la méthode selon l'invention, au moins 75 % en poids des particules ont une taille allant de 0,5 à 50 µm ou bien une taille inférieure à 10 µm. En particulier, au moins 75 % en poids des particules ont une taille inférieure à 5 µm ou à 2 µm, voire inférieure à 1 µm.

De manière également avantageuse pour la méthode selon l'invention, au moins 90 % en poids des particules ont une taille allant de 0,5 à 50 µm ou bien une taille inférieure à 10 µm. En particulier, au moins 90 % en poids des particules ont une taille inférieure à 5 µm ou à 2 µm, voire inférieure à 1 µm.

De manière préférée, la méthode selon l'invention met en oeuvre au moins une matière minérale synthétique ou d'origine naturelle.

De manière également préférée, la méthode selon l'invention met en oeuvre au moins une matière minérale choisie parmi les carbonates de métal alcalino-terreux, de préférence carbonate de calcium (carbonate de calcium naturel ou carbonate de calcium précipité), carbonate de strontium, carbonate de magnésium, carbonate de baryum, dolomie, kaolin, dioxyde de titane, talc, chaux, sulfate de calcium, sulfate de baryum. De manière plus préférée, la méthode selon l'invention met en oeuvre au moins une matière minérale choisie parmi carbonate de calcium naturel, carbonate de calcium précipité, dolomie, kaolin, kaolin calciné, dioxyde de titane, talc, chaux.

La méthode selon l'invention peut mettre en oeuvre une unique matière minérale ou bien plusieurs matières minérales. Ainsi, la méthode selon l'invention peut mettre en oeuvre deux ou trois matières minérales. En particulier, la méthode selon l'invention peut mettre en oeuvre du carbonate de calcium et au moins une autre matière minérale choisie parmi dolomie, kaolin, kaolin calciné, dioxyde de titane, talc, chaux, notamment du carbonate de calcium et du kaolin ou du carbonate de calcium et de la chaux. De même, la méthode selon l'invention peut mettre en oeuvre du dioxyde de titane et au moins une autre matière minérale choisie parmi carbonate de calcium, dolomie, kaolin, talc, chaux, notamment du dioxyde de titane et du kaolin ou du dioxyde de titane et de la chaux. Egalement, la méthode selon l'invention peut mettre en oeuvre du kaolin ou du kaolin calciné et au moins une autre matière minérale choisie parmi dolomie, talc, chaux. La méthode selon l'invention peut également mettre en oeuvre du talc et de la chaux ou du talc et de la dolomie.

Outre une matière minérale, la méthode selon l'invention met en oeuvre au moins un polymère particulier issu d'une réaction de polymérisation radicalaire, en présence d'hypophosphite de sodium, d'un sel partiel de sodium d'acide itaconique et décarboxylation partielle du polymère obtenu.

De manière préférée, la réaction de polymérisation est réalisée dans l'eau, dans un solvant, seul ou en mélange avec de l'eau, notamment un solvant alcoolique, en particulier alcool isopropylique. De manière particulièrement préférée, la réaction de polymérisation est réalisée dans l'eau.

De manière également préférée, la réaction de polymérisation est réalisée en présence d'au moins un composé générateur de radicaux, de préférence un composé générateur de radicaux choisi parmi peroxyde d'hydrogène, persulfate de sodium, persulfate de potassium, persulfate d'ammonium, hydroperoxyde d'alkyle, hydroperoxyde d'aryle et leurs mélanges. De manière particulièrement préférée, la réaction de polymérisation est réalisée en présence d'un composé générateur de radicaux choisi parmi peroxyde d'hydrogène, persulfate de sodium, persulfate de potassium, persulfate d'ammonium.

De manière également préférée, la réaction de polymérisation peut être réalisée en présence d'un autre agent de transfert de chaîne, de préférence d'un agent de transfert de chaîne choisi parmi les sels du dipropionate trithiocarbonate (DPTTC ou disodium 2,2'-(thiocarbonylbisthio)-dipropanoate - n° CAS 864970-33-2), notamment ses sels de sodium ; alcool isopropylique ; composés mercaptans. De manière particulièrement préférée, la réaction de polymérisation est réalisée en présence de DPTTC ou de ses sels, notamment ses sels de sodium. Le DPTTC peut être mis en oeuvre sous la forme d'une solution aqueuse.

La méthode selon l'invention met en oeuvre un sel partiel de sodium de l'acide itaconique comme monomère pour la préparation du polymère utilisé lors du broyage d'une matière minérale. Ce sel partiel de sodium d'acide itaconique est obtenu par neutralisation partielle d'au moins une des deux fonctions acides carboxyliques de l'acide itaconique. Cette neutralisation correspond à la salification d'au moins une de ces deux fonctions acides carboxyliques. Elle est mise en oeuvre au moyen d'au moins un composé comprenant du sodium, par exemple de la soude ou du carbonate de sodium, du bicarbonate de sodium, de préférence de la soude.

La première fonction acide carboxylique, ou première acidité, de l'acide itaconique est la fonction acide carboxylique distale, la plus éloignée de l'insaturation éthylénique. Elle possède une constante de dissociation (pKₐ) à 25°C de 3,85. La seconde fonction acide carboxylique, ou seconde acidité, de l'acide itaconique est la fonction acide carboxylique proximale, la plus proche de de l'insaturation éthylénique. Elle possède une constante de dissociation (pKₐ) à 25°C de 5,45.

Selon l'invention, la première acidité de l'acide itaconique est partiellement ou totalement salifiée pour conduire au sel partiel d'acide itaconique mis en oeuvre. De manière préférée selon l'invention, la première acidité de l'acide itaconique est totalement salifiée et la seconde acidité de l'acide itaconique est partiellement salifiée. De manière également préférée selon l'invention, la première acidité de l'acide itaconique est partiellement salifiée et la seconde acidité de l'acide itaconique n'est pas salifiée. De manière plus préférée selon l'invention, la première acidité de l'acide itaconique est totalement salifiée et la seconde acidité de l'acide itaconique n'est pas salifiée.

De manière particulièrement préférée selon l'invention, la première acidité de l'acide itaconique est totalement salifiée et la seconde acidité de l'acide itaconique est salifiée à 20 % en mol. De manière plus particulièrement préférée selon l'invention, la première acidité de l'acide itaconique est totalement salifiée et la seconde acidité de l'acide itaconique est salifiée à 40 % en mol. De manière encore plus préférée selon l'invention, la première acidité de l'acide itaconique est totalement salifiée et la seconde acidité de l'acide itaconique est salifiée à 60 % en mol.

Par ailleurs, pour la méthode selon l'invention, la première et la seconde acidités de l'acide itaconique peuvent être totalement salifiées et la réaction de polymérisation être conduite en présence d'un acide.

Les conditions réactionnelles mises en oeuvre lors de la préparation du sel partiel de sodium de l'acide itaconique selon l'invention sont généralement connues en tant que telles, par exemple dans le document WO 2015-100412.

De manière préférée selon l'invention, le sel partiel de sodium de l'acide itaconique mis en oeuvre selon l'invention est obtenu à partir d'acide itaconique d'origine naturelle, en particulier à partir d'acide itaconique d'origine végétale.

De manière également préférée, le polymère mis en oeuvre selon l'invention est un polymère d'au moins un sel partiel de sodium de l'acide itaconique selon l'invention. Ainsi, le polymère ne comprend que des motifs issus du sel partiel de sodium de l'acide itaconique à l'exception des motifs issus de l'hypophosphite de sodium utilisé ou bien de l'éventuel autre agent de transfert de chaîne mis en oeuvre.

La masse moléculaire moyenne en poids Mw (mesurée par CES ou chromatographie d'exclusion stérique) du polymère mis en oeuvre selon l'invention peut varier assez largement.

De manière également préférée, le polymère selon l'invention a une masse moléculaire moyenne en poids Mw inférieure à 20 000 g/mol. Plus préférentiellement, le polymère selon l'invention a une masse moléculaire moyenne en poids Mw inférieure à 15 000 g/mol ou inférieure à 10 000 g/mol. Encore plus préférentiellement, le polymère selon l'invention a une masse moléculaire moyenne en poids Mw inférieure à 5 000 g/mol ou inférieure à 3 000 g/mol.

De manière également préférée, le polymère selon l'invention a une masse moléculaire moyenne en poids Mw supérieure à 1 000 g/mol. De manière plus préférée, le polymère selon l'invention a une masse moléculaire moyenne en poids Mw supérieure à 1 200 g/mol. Ainsi, le polymère selon l'invention a préférentiellement une masse moléculaire moyenne en poids Mw allant de 1 000 g/mol à 20 000, 15 000, 10 000, 5 000 ou à 3 000 g/mol. Plus préférentiellement, le polymère selon l'invention a une masse moléculaire moyenne en poids Mw allant de 1 200 g/mol à 20 000, 15 000, 10 000, 5 000 ou à 3 000 g/mol.

Selon l'invention, l'indice de polymolécularité IP, ou indice de polydispersité, du polymère mis en oeuvre est inférieur à 4. De manière préférée, l'indice de polymolécularité IP du polymère va de 1,2 à 4 ou de 1,5 à 4. De manière plus préférée, l'indice de polymolécularité IP du polymère va de 2 à 3 ou de 1,5 à 3 ou encore de 1,2 à 2,5 ou de 1,5 à 2,5.

Une étape essentielle de la préparation du polymère mis en oeuvre selon l'invention est la réaction de polymérisation radicalaire du sel partiel de sodium d'acide itaconique. La réaction de polymérisation est réalisée en présence d'hypophosphite de sodium et à une température supérieure à 50°C. La réaction de polymérisation est connue en tant que telle.

De manière préférée, elle peut être effectuée à une température supérieure à 80°C ou supérieure à 95°C. Elle peut être réalisée dans un solvant choisi parmi eau, solvants organiques et leurs mélanges, de préférence dans l'eau.

De manière préférée lors de la réaction de polymérisation, un composé générateur de radicaux peut être utilisé. Le composé générateur de radicaux préféré est choisi parmi un composé peroxyde, de préférence peroxyde d'hydrogène, peroxyde de benzoyle, hydroperoxyde de benzoyle et leurs mélanges ; les persulfates de métaux alcalins, en particulier le persulfate de sodium et le persulfate de potassium ; le persulfate d'ammonium ; les peroxydes partiellement hydrosolubles, en particulier le peracide succinique, l'hydroperoxyde de t-butyle, l'hydroperoxyde de cumyle ; les persulfates associés à un ion ferreux, à un ion sulfite ou à un ion bisulfite ; les composés azoïques, par exemple azo-bis-isobutyronitrile (AZDN ou AIBN) ; et leurs mélanges. Le composé générateur de radicaux particulièrement préféré est choisi parmi un composé peroxyde d'hydrogène ; les persulfates de métaux alcalins, en particulier le persulfate de sodium et le persulfate de potassium ; le persulfate d'ammonium.

Des conditions réactionnelles particulières de la réaction de polymérisation sont décrites dans le document WO 2015-100412.

Une autre étape essentielle de la préparation du polymère mis en oeuvre selon l'invention est la décarboxylation partielle. De manière essentielle pour l'invention, la décarboxylation est partielle afin que le polymère mis en oeuvre lors du broyage de la matière minérale comprenne des fonctions acides carboxyliques résiduelles libres ou salifiées, de préférence des fonctions acides carboxyliques résiduelles salifiées. La décarboxylation partielle du polymère peut être réalisée lors de la polymérisation ou bien postérieurement à la réaction de polymérisation. Elle peut également être en partie réalisée lors de la réaction de polymérisation et en partie postérieurement à la réaction de polymérisation.

Selon l'invention, la décarboxylation partielle peut être réalisée par chauffage, par exemple par chauffage en milieu aqueux. De manière préférée, la décarboxylation partielle peut être réalisée à la température de polymérisation ou à une température supérieure à la température de polymérisation du sel partiel de sodium d'acide itaconique. La température de décarboxylation peut être supérieure 60°C et aller jusqu'à 160°C. Elle peut être supérieure à 85°C ou bien supérieure à 100°C ou à 110°C. La température de décarboxylation peut également être supérieure à 120°C, par exemple être de 125°C. De manière avantageuse, la décarboxylation partielle peut être réalisée dans l'eau et chauffage à reflux.

La décarboxylation peut également être réalisée en présence d'un ou plusieurs catalyseurs. Comme exemple de catalyseurs de décarboxylation, on peut utiliser des dérivés métalliques tels le dioxyde de thorium ou des composés à base de cuivre.

Ainsi, lors de la décarboxylation, seuls certains groupements acides carboxyliques sont éliminés ; les groupements acides carboxyliques neutralisés ne pouvant pas être décarboxylés. Le taux de décarboxylation peut être évalué de manière connue, par exemple en mesurant l'évolution de la quantité de dioxyde de carbone dégagé lors de la décarboxylation ou bien également par la mesure de perte de masse.

De manière préférée selon l'invention, le polymère de sel partiel de sodium d'acide itaconique est partiellement décarboxylé, de préférence 10 % molaire ou 20 % molaire de la seconde acidité sont décarboxylés. De manière également préférée, 30 % molaire ou 40 % molaire de la seconde acidité sont décarboxylés. Egalement de manière préférée, 50 % molaire ou 60 % molaire de la seconde acidité sont décarboxylés. De manière plus préférée, 70 % molaire, 80 % molaire ou 90 % molaire de la seconde acidité sont décarboxylés. De manière également plus préférée, de 5 à 90 % molaire ou de 20 à 85 % molaire ou encore de 50 à 85 % molaire de la seconde acidité du polymère sont décarboxylés.

Outre la réaction de polymérisation et la décarboxylation, une autre étape essentielle de la préparation du polymère mis en oeuvre selon l'invention est la neutralisation partielle ou totale du polymère décarboxylé. Selon l'invention, cette neutralisation a donc lieu à l'issue de l'étape (a).

Selon l'invention, le taux de neutralisation du polymère partiellement décarboxylé peut varier de manière importante. Le polymère partiellement décarboxylé peut donc être totalement neutralisé ou partiellement neutralisé. De manière préférée, le polymère partiellement décarboxylé est neutralisé à 40 % en mol ou à 50 % en mol. De manière plus préférée, le polymère partiellement décarboxylé est neutralisé à 60 % en mol ou à 70 % en mol. De manière également plus préférée, le polymère partiellement décarboxylé est neutralisé à 80 % en mol ou à 90 % en mol. Le polymère partiellement décarboxylé peut également être neutralisé à 95 % en mol ou à 100 % en mol.

De manière également préférée, cette neutralisation est réalisée au moyen d'un dérivé comprenant du sodium. Plus préférentiellement, le polymère est neutralisé avec de la soude, du carbonate de sodium ou du bicarbonate de sodium, en particulier de la soude.

Des conditions particulières de décarboxylation ou de neutralisation sont décrites dans le document FR 1515558.

La mise en oeuvre du polymère particulier lors de la méthode de broyage selon l'invention permet d'obtenir des particules de matière minérale possédant des propriétés particulièrement avantageuses lors de leur utilisation, notamment lors de leur utilisation comme charge de masse papetière. En particulier, la méthode selon l'invention permet de préparer des particules de matière minérale pour la préparation de suspensions aqueuses possédant une demande cationique réduite.

De manière préférée, la méthode selon l'invention permet de préparer une suspension aqueuse de particules de matière minérale de taille médiane de 1,5 ± 0,15 µm possédant une demande cationique inférieure ou égale en valeur absolue à 5 µ-équivalent par g de suspension de particules dans l'eau à une concentration de 65 à 75 % en poids. La suspension aqueuse de particules de matière minérale de taille médiane de 1,5 ± 0,15 µm possède alors une demande en cationique estimée par une mesure du courant d'écoulement de la suspension de charge minérale, mesuré dans l'eau, à une concentration de 65 à 75 % en poids au moyen d'un appareil Mütek avec du chlorure de polydiallyldimethylammonium (polyDADMAC ou polyDDA - n° CAS 26062-79-3) 0,001 N de masse moléculaire particulière, inférieure ou égale en valeur absolue à 5 µ-équivalent par g de suspension de particules de matière minérale dans l'eau.

De manière également préférée, la méthode selon l'invention permet de préparer une suspension aqueuse de particules de matière minérale de taille médiane de 0,7 ± 0,15 µm possédant une demande cationique inférieure ou égale en valeur absolue à 13 µ-équivalent par g de suspension de particules dans l'eau à une concentration de 65 à 75 % en poids. La suspension aqueuse de particules de matière minérale de taille médiane de 0,7 ± 0,15 µm possède alors une demande en cationique estimée par une mesure du courant d'écoulement de la suspension de charge minérale, mesuré dans l'eau, à une concentration de 75 % en poids au moyen d'un appareil Mütek avec du polyDADMAC (0,001 N), inférieure ou égale en valeur absolue à 13 µ-équivalent par g de suspension de particules de matière minérale dans l'eau.

L'invention concerne également l'utilisation comme agent d'aide au broyage de particules de matière minérale, d'au moins un polymère obtenu :
(a) par une réaction de polymérisation radicalaire en présence d'hypophosphite de sodium, à une température supérieure à 50°C, d'un sel partiel de sodium d'acide itaconique et décarboxylation partielle du polymère obtenu puis
(b) neutralisation partielle ou totale du polymère décarboxylé résultant de l'étape (a), au moyen d'un dérivé comprenant du sodium.

Les caractéristiques particulières, avantageuses ou préférées de la méthode de broyage selon l'invention définissent des utilisations selon l'invention qui sont également particulières, avantageuses ou préférées.

Outre le broyage, l'invention concerne également une composition aqueuse. La composition aqueuse selon l'invention comprend des particules de matière minérale broyée et au moins un polymère définis pour la méthode de broyage selon l'invention. Les caractéristiques particulières, avantageuses ou préférées de la méthode de broyage selon l'invention définissent des compositions aqueuses selon l'invention qui sont également particulières, avantageuses ou préférées.

De manière préférée pour la composition aqueuse selon l'invention, la suspension aqueuse de particules de matière minérale de taille médiane de 1,5 ± 0,15 µm possède une demande cationique inférieure ou égale en valeur absolue à 5 µ-équivalent par g de suspension de particules dans l'eau à une concentration de 65 à 75 % en poids. De manière également préférée pour la composition aqueuse selon l'invention, la suspension aqueuse de particules de matière minérale de taille médiane de 0,7 ± 0,15 µm possède une demande cationique inférieure ou égale en valeur absolue à 13 µ-équivalent par g de suspension de particules dans l'eau à une concentration de 65 à 75 % en poids.

De manière particulièrement préférée, la composition aqueuse selon l'invention comprend également au moins une matière cellulosique. De préférence, ces matières cellulosiques sont des fibres de matière cellulosique ou des fibrilles de matière cellulosique.

La composition aqueuse selon l'invention peut également comprendre au moins un additif, de préférence un additif choisi parmi un agent de collage de la matière cellulosique, un agent de rétention des particules de matière minérale ou un agent de rétention de particules fines de cellulose.

De manière particulièrement préférée, la composition aqueuse selon l'invention est une composition aqueuse de préparation de papier qui comprend des particules de matière minérale broyée et au moins un polymère définis pour la méthode de broyage selon l'invention. De manière plus particulièrement préférée, la composition aqueuse de préparation de papier selon l'invention comprend des particules de matière minérale broyée et au moins un polymère définis pour la méthode de broyage selon l'invention, au moins une matière cellulosique, de préférence des fibres de matière cellulosique ou des fibrilles de matière cellulosique, et au moins un additif, de préférence un additif choisi parmi un agent de collage de la matière cellulosique, un agent de rétention des particules de matière minérale. La composition aqueuse de préparation de papier selon l'invention peut prendre la forme d'une composition de charge de masse papetière.

L'invention fournit également une méthode de préparation d'une composition de charge de masse papetière comprenant une suspension aqueuse de particules de matière minérale obtenue par une méthode comprenant le broyage, en présence d'eau, d'au moins une matière minérale en présence d'au moins un polymère obtenu :
(a) par une réaction de polymérisation radicalaire en présence d'hypophosphite de sodium, à une température supérieure à 50°C, d'un sel partiel de sodium d'acide itaconique et décarboxylation partielle du polymère obtenu puis
(b) neutralisation partielle ou totale du polymère décarboxylé résultant de l'étape (a), au moyen d'un dérivé comprenant du sodium,
pour former la suspension aqueuse de particules de matière minérale.

De manière analogue, l'invention fournit également une méthode de préparation d'une composition de sauce de couchage papetière comprenant une suspension aqueuse de particules de matière minérale obtenue par une méthode comprenant le broyage, en présence d'eau, d'au moins une matière minérale en présence d'au moins un polymère obtenu selon l'invention.

Les caractéristiques particulières, avantageuses ou préférées de la méthode de broyage selon l'invention définissent des méthodes de préparation de compositions de charge de masse papetière selon l'invention ou de compositions de sauce de couchage papetière qui sont également particulières, avantageuses ou préférées.

L'invention fournit également une méthode de préparation de papier comprenant l'utilisation d'une composition aqueuse selon l'invention ou d'une composition de charge de masse papetière selon l'invention.

La méthode de préparation de papier selon l'invention permet de réduire la quantité d'agents cationiques mis en oeuvre. De manière préférée, la méthode de préparation de papier selon l'invention permet de réduire la quantité d'agents floculants cationiques, de réduire la quantité d'agents coagulants cationiques ou de réduire la quantité d'agents cationiques de rétention de charge minérale. Cette réduction est possible par rapport à une méthode connue ne mettant pas en oeuvre de polymère selon l'invention ou bien par rapport à une méthode connue mettant en oeuvre un polymère de l'état de la technique. Les exemples qui suivent permettent d'illustrer les différents aspects de l'invention. Les méthodes ou techniques mises en oeuvre sont connues ou décrites.

### Masse moléculaire par chromatographie d'exclusion stérique (CES) :

Les poids moléculaires et indices de polymolécularité des polymères obtenus par une réaction de polymérisation radicalaire d'un sel partiel de sodium d'acide itaconique et décarboxylation partielle des polymères obtenus puis neutralisation partielle ou totale du polymère décarboxylé sont déterminés par chromatographie d'exclusion stérique.

Une prise d'essai de la solution de polymère correspondant à 90 mg de matière sèche est introduite dans un flacon de 10 mL. Il est ajouté de la phase mobile, additionnée de 0,04 % de diméthylformamide (DMF), jusqu'à une masse totale de 10 g. La composition de cette phase mobile est la suivante : NaHCO₃ : 0,05 mol/L, NaNO₃ : 0,1 mol/L, triéthanolamine : 0,02 mol/L, NaN₃ 0,03 % massique.

La chaîne de CES est composée d'une pompe isocratique de type Water 510, dont le débit est réglé à 0,8 mL/min, d'un passeur d'échantillons Waters 717+, d'un four contenant une précolonne de type Guard Column Ultrahydrogel Waters de 6 cm de longueur et 40 mm de diamètre intérieur, suivie d'une colonne linéaire de type Ultrahydrogel Waters de 30 cm de longueur et 7,8 mm de diamètre intérieur.

La détection est assurée au moyen d'un réfractomètre différentiel de type RI Waters 410. Le four est porté à la température de 60°C et le réfractomètre est porté à la température de 45°C.

Le dispositif de CES est étalonné avec une série d'étalons polyacrylate de sodium fournis par Polymer Standards Service de poids moléculaire au sommet de pic compris entre 1 000 et 1.10⁶ g/mol et d'indice de polymolécularité compris entre 1,4 et 1,7, ainsi qu'avec un polyacrylate de sodium de poids moléculaire égal à 5 600 g/mole et d'indice de polymolécularité égal à 2,4. La courbe d'étalonnage est de type linéaire et prend en compte la correction obtenue grâce au marqueur de débit : le diméthylformamide (DMF). L'acquisition et le traitement du chromatogramme sont effectués par l'utilisation du logiciel PSS WinGPC Scientific v 4.02. Le chromatogramme obtenu est intégré dans la zone correspondant à des poids moléculaires supérieurs à 65 g/mol.

### Technique de broyage et mesure de la granulométrie :

A l'aide d'une pompe péristaltique, des suspensions de grains grossiers de matière minérale préparées en présence d'un polymère selon l'invention sont introduites dans un broyeur Dyno Mill de type KDL pilote 1,4 L contenant 2 500 g de billes en céramiques de type ER 120 S de 0,6 à 1,0 mm de diamètre en provenance de la société ZirPro. Les conditions de broyage sont ajustées de manière à obtenir une suspension de particules de matière minérale de granulométrie souhaitée. Cette suspension est ensuite caractérisée par une mesure granulométrique, une mesure de viscosité Brookfield ainsi qu'une mesure de courant d'écoulement ou demande cationique.

Les caractéristiques granulométriques relatives à la préparation de particules de matière minérale sont déterminées à partir d'un appareil Sedigraph 5100 (Micrometrics, USA). De manière connue, cette méthode ainsi que cet instrument de mesure permettent de mesurer la répartition granulométrique des suspensions de particules de matière minérale. Ils permettent notamment de déterminer la valeur du diamètre médian ou taille médiane de la suspension de particules de matière minérale (d₅₀). Ces mesures sont réalisées à partir d'une suspension de particules de matière minérale diluée à une concentration d'environ 33 g de matière sèche par litre de solution d'un polyacrylate de sodium de poids moléculaire égal à 4 000 g/mol et de concentration égale à 1,6 g de polyacrylate de sodium sec par litre de solution. Cet échantillon est dispersé et soniqué avant la mesure.

### Mesure de viscosité Brookfield :

Les viscosités Brookfield (mPa.s) des suspensions de particules de matière minérale préparées selon la méthode de l'invention sont mesurées après l'opération de broyage à 25 ± 1°C et à une vitesse de rotation de 100 tour/min à l'aide d'un viscosimètre Brookfield DVIII équipé d'un module adapté, par exemple 2 à 5.

### Mesure de charge Mütek ou demande cationique :

Les mesures du courant d'écoulement ou demande cationique des suspensions de particules minérale sont réalisées à l'aide d'un appareil Mütek PCD 03 équipé d'un titrateur automatique PCD titrator two. Les suspensions sont titrées à l'aide d'un polymère cationique de concentration connue jusqu'à neutralisation des charges contenues dans l'échantillon de suspension de particules de charge minérale à caractériser. La solution titrante est une solution de polyDADMAC de masse moléculaire comprise entre 10 000 et 400 000 g/mol. La solution certifiée de ce polymère titrant à la concentration de 0,001 N est commerciale (Noviprofibre, France).

Lors de la mesure de la demande cationique de la suspension aqueuse de particules de charge minérale, on pèse environ exactement 0,8 g de suspension dans la cellule de mesure puis on ajoute 20 mL d'eau bipermutée. On place le piston dans la cellule et on démarre le moteur en actionnant le va-et-vient du piston. Puis après 2 à 3 min, on effectue la titration. A la fin de la titration, l'appareil indique le résultat à l'écran en µ-équivalent/g de suspension. La demande cationique des suspensions aqueuses de particules de charge minérale est exprimée en µ-équivalent/g de suspension.

### Exemple 1 :

A partir d'acide itaconique partiellement neutralisé au moyen de soude ajoutée lentement, sous agitation et à température contrôlée, puis polymérisé par chauffage dans l'eau et sous agitation en présence d'hypophosphite de sodium et d'hydroperoxyde de tertiobutyl ou de peroxyde d'hydrogène, et enfin partiellement décarboxylé par chauffage à reflux dans l'eau, on prépare une solution polymérique (P1-1) de polyitaconate de sodium partiellement décarboxylé ayant une concentration de 40 % en poids de polymère et un pH de 9 (méthode décrite dans les exemples du document WO 2015-100412).

Puis, on prépare une suspension de particules de carbonate de calcium (S1-1) en broyant de la roche calcite grossièrement concassée et provenant de la région d'Orgon, France (BL 200, Omya) en présence de polymère (P1-1) (0,26 % en poids sec de polymère par rapport à la quantité de roche calcite) comme agent d'aide au broyage. La suspension obtenue a une teneur en matière minérale solide de 75 ± 1 % en poids. Les conditions de broyage sont ajustées de manière à obtenir une suspension de particules de carbonate de calcium dont le diamètre médian est de 1,5 ± 0,15 µm.

De manière analogue, on prépare des suspensions de particules de carbonate de calcium (S1-2) à (S1-4) au moyen de solutions polymériques (P1-2) à (P1-4) d'autres polyitaconates de sodium partiellement décarboxylés. Enfin, on prépare une suspension comparative de particules de carbonate de calcium (S1-C) au moyen d'une solution polymérique d'un polyacrylate de sodium (P1-C) connu (Rheosperse 3206, Coatex) utilisée à la même dose et dans les mêmes conditions.

Les caractéristiques des polymères (M_{w}, IP et taux de décarboxylation de la deuxième acidité en % molaire) et des suspensions (d₅₀, viscosité Brookfield à 100 tour/min mesurée à 25°C et valeur absolue de la charge Mütek) sont présentées dans le tableau 1.

**Tableau 1**

| Polymère | (P1-1) | (P1-2) | (P1-3) | (P1-4) | (P1-C) |
|---|---|---|---|---|---|
| M_{w} (g/mol) | 2 140 | 2 200 | 2 740 | 4 500 | 4 540 |
| IP | 1,73 | 1,72 | 1,82 | 2,01 | 2,12 |
| taux de décarboxylation (%) | 81 | 63 | 75 | 80 | / |
| suspension | (S1-1) | (S1-2) | (S1-3) | (S1-4) | (S1-C) |
| d₅₀ (µm) | 1,55 | 1,62 | 1,48 | 1,61 | 1,61 |
| viscosité (mPa.s) | 150 | 270 | 260 | 305 | 120 |
| \| charge Mütek \| (µeq / g) | 4,6 | 5,0 | 4,3 | 5,0 | 6,5 |

On constate que les agents d'aide de broyage selon l'invention permettent de préparer des suspensions de charge minérale de carbonate de calcium broyé de faibles viscosités dont le diamètre médian est de 1,5 ± 0,15 µm. La demande cationique de ces suspensions de charge minérale est inférieure ou égale en valeur absolue à 5 µ-équivalent par gramme de suspension de particules dans l'eau à une concentration de 75 % en poids.

### Exemple 2 :

De manière analogue à l'exemple 1, on prépare des suspensions de particules de carbonate de calcium (S2-1) et (S2-2) en broyant de la roche calcite grossièrement concassée et provenant de la région d'Orgon, France (BL 200, Omya) en présence de solutions polymériques (P1-1) et (P1-3) à 40 % en poids de polymère et de pH de 9 (0,6 % en poids sec de polymère par rapport à la quantité de roche calcite) comme agents d'aide au broyage. Les suspensions obtenues ont une teneur en matière minérale solide de 75 ± 1% en poids. Les conditions de broyage sont ajustées de manière à obtenir une suspension de particules de carbonate de calcium dont le diamètre médian est de 0,7 ± 0,15 µm.

Dans les mêmes conditions, on prépare également une suspension comparative de particules de carbonate de calcium (S2-C) au moyen d'une solution polymérique d'un polyacrylate de sodium (P1-C).

Les caractéristiques des polymères (M_{w}, IP et taux de décarboxylation de la deuxième acidité en % molaire) et des suspensions (d₅₀, viscosité Brookfield à 100 tour/min mesurée à 25°C et valeur absolue de la charge Mütek) sont présentées dans le tableau 2.

**Tableau 2**

| polymère | (P1-1) | (P1-3) | (P1-C) |
|---|---|---|---|
| M_{w} (g/mol) | 2 140 | 2 740 | 4 540 |
| IP | 1,73 | 1,82 | 2,12 |
| taux de décarboxylation (%) | 81 | 75 | / |
| suspension | (S2-1) | (S2-2) | (S2-C) |
| d₅₀ (µm) | 0,74 | 0,70 | 0,74 |
| viscosité (mPa.s) | 320 | 590 | 150 |
| \| charge Mütek \| (µeq / g) | 12,3 | 11,8 | 15,6 |

A nouveau, on constate que les agents d'aide de broyage selon l'invention permettent de préparer des suspensions de charge minérale de carbonate de calcium broyé de faible viscosité dont le diamètre médian est de 0,7 ± 0,15 µm. La demande cationique de ces suspensions de particules de charge minérale est inférieure ou égale en valeur absolue à 13 µ-équivalent par gramme de suspension de particules dans l'eau à une concentration de 75 % en poids.

### Exemple 3 :

Selon la méthode de l'exemple 1, à partir d'acide itaconique partiellement neutralisé au moyen de soude puis polymérisé dans l'eau en présence d'hypophosphite de sodium et enfin partiellement décarboxylé, on prépare une solution polymérique (P3-1) de polyitaconate de sodium partiellement décarboxylé ayant une concentration de 42 % en poids de polymère et un pH de 5,5.

Puis, on prépare une suspension de particules de carbonate de calcium et de particules de chaux (S3-1) en broyant de la roche calcite grossièrement concassée et provenant de la région d'Orgon, France (BL 200, Omya) et de la chaux hydratée (Supercalco 95 - Carmeuse) (rapport carbonate de calcium/chaux hydratée à 100/0,1 en poids) en présence de polymère (P3-1) (0,26 % en poids sec de polymère par rapport à la quantité de roche calcite et de chaux) comme agent d'aide au broyage. La suspension obtenue a une teneur en matières minérales solides de 75 ± 1% en poids. Les conditions de broyage sont ajustées de manière à obtenir une suspension de particules de carbonate de calcium dont le diamètre médian est de 1,5 ± 0,15 µm.

Les caractéristiques du polymère (M_{w}, IP et taux de décarboxylation de la deuxième acidité en % molaire) et de la suspension (d₅₀, viscosité Brookfield à 100 tour/min mesurée à 25°C et valeur absolue de la charge Mütek) sont présentées dans le tableau 3.

**Tableau 3**

| polymère | (P3-1) |
|---|---|
| M_{w} (g/mol) | 2 000 |
| IP | 1,64 |
| taux de décarboxylation (%) | 69 |
| suspension | (S3-1) |
| d₅₀ (µm) | 1,56 |
| viscosité (mPa.s) | 105 |
| \| charge Mütek \| (µeq / g) | 4,5 |

On constate que l'agent d'aide au broyage selon l'invention permet de préparer une suspension de charges minérales de faible viscosité dont le diamètre médian est de 1,5 ± 0,15 µm. La demande cationique de cette suspension est inférieure ou égale en valeur absolue à 5 µ-équivalent par gramme de suspension de particules dans l'eau à une concentration de 75 % en poids.

### Exemple 4 :

De manière analogue à l'exemple 1, on prépare une suspension de particules de carbonate de calcium (S4-1) en broyant de la roche calcite grossièrement concassée et provenant de la région d'Orgon, France (BL 200, Omya) en présence d'un polymère (P4-1) à 40 % en poids de polymère et de pH de 11,8 (0,26 % en poids sec de polymère par rapport à la quantité de roche calcite) comme agent d'aide au broyage. La suspension obtenue a une teneur en matière minérale solide de 75 ± 1% en poids. Les conditions de broyage sont ajustées de manière à obtenir une suspension de particules de carbonate de calcium dont le diamètre médian est de 1,5 ± 0,15 µm.

Les caractéristiques du polymère (M_{w}, IP et taux de décarboxylation de la deuxième acidité en % molaire) et de la suspension (d₅₀, viscosité Brookfield à 100 tour/min mesurée à 25°C et valeur absolue de la charge Mütek) sont présentées dans le tableau 4.

**Tableau 4**

| polymère | (P4-1) |
|---|---|
| M_{w} (g/mol) | 3 600 |
| IP | 2,00 |
| taux de décarboxylation (%) | 70 |
| suspension | (S4-1) |
| d₅₀ (µm) | 1,56 |
| viscosité (mPa.s) | 191 |
| \| charge Mütek \| (µeq / g) | 4,7 |

On constate que l'agent d'aide au broyage selon l'invention permet de préparer une suspension de charges minérales de faible viscosité dont le diamètre médian est de 1,5 ± 0,15 µm. La demande cationique de cette suspension est inférieure ou égale en valeur absolue à 5 µ-équivalent par gramme de suspension de particules dans l'eau à une concentration de 75 % en poids.

### Exemple 5 :

De manière analogue à l'exemple 1, on prépare des suspensions de particules de carbonate de calcium (S5-1) et (S5-2) en broyant de la roche calcite grossièrement concassée et provenant de la région d'Orgon, France (BL 200, Omya) en présence de solutions polymériques (P5-1) et (P5-2) à 40 % en poids de polymère et de pH de 9 (0,20 % en poids sec de polymère par rapport à la quantité de roche calcite) comme agents d'aide au broyage. Les suspensions obtenues ont une teneur en matière minérale solide de 65 ± 1 % en poids. Les conditions de broyage sont ajustées de manière à obtenir une suspension de particules de carbonate de calcium dont le diamètre médian est de 1,5 ± 0,15 µm.

Les caractéristiques des polymères (M_{w}, IP et taux de décarboxylation de la deuxième acidité en % molaire) et des suspensions (d₅₀, viscosité Brookfield à 100 tour/min mesurée à 25°C et valeur absolue de la charge Mütek) sont présentées dans le tableau 5.

**Tableau 5**

| polymère | (P5-1) | (P5-2) |
|---|---|---|
| M_{w} (g/mol) | 2 400 | 2 280 |
| IP | 1,82 | 1,76 |
| taux de décarboxylation (%) | 20 | 32 |
| suspension | (S5-1) | (S5-2) |
| d₅₀ (µm) | 1,58 | 1,57 |
| viscosité (mPa.s) | 1 400 | 544 |
| \| charge Mütek \| (µeq / g) | 2,6 | 2,5 |

A nouveau, on constate que les agents d'aide de broyage selon l'invention permettent de préparer des suspensions de particules de charge minérale de faible viscosité dont le diamètre médian est de 1,5 ± 0,15 µm. La demande cationique de ces suspensions est inférieure ou égale en valeur absolue à 5 µ-équivalent par gramme de suspension de particules dans l'eau à une concentration de 65 % en poids.

L'ensemble de ces exemples montrent que les différents agents d'aide au broyage selon l'invention permettent d'obtenir une bonne efficacité lors d'opérations de broyage de grains grossiers de particules minérales. Ils permettent de produire des suspensions de particules de matière minérale dont la granulométrie et la concentration sont bien contrôlées. Ces suspensions peuvent alors être parfaitement pompées et véhiculées dans les installations utilisées ultérieurement, en particulier lors de la préparation de composition de charge de masse papetière.

En outre, lorsque ces suspensions sont utilisées pour la préparation de composition de charge de masse papetière, leurs faibles valeurs absolues de la charge Mütek permet de diminuer les quantités de composés cationiques utilisés dans ces compositions.

## Revendications

1. Méthode de préparation de particules de matière minérale comprenant le broyage, en présence d'eau, d'au moins une matière minérale en présence d'au moins un polymère obtenu :
(a) par une réaction de polymérisation radicalaire en présence d'hypophosphite de sodium, à une température supérieure à 50°C, d'un sel partiel de sodium d'acide itaconique et décarboxylation partielle du polymère obtenu puis
(b) neutralisation partielle ou totale du polymère décarboxylé résultant de l'étape (a), au moyen d'un dérivé comprenant du sodium.

2. Méthode selon la revendication 1 pour laquelle les particules ont une taille, définie par leur diamètre médian d₅₀ en poids et mesurée selon la méthode de la description, inférieure à 50 µm ou bien une taille, définie par leur diamètre médian d₅₀ en poids et mesurée selon la méthode de la description, allant de 0,05 à 50 µm ou bien une taille, définie par leur diamètre médian d₅₀ en poids et mesurée selon la méthode de la description, inférieure à 10 µm, de préférence inférieure à 5 µm ou à 2 µm, plus préférentiellement inférieure à 1 µm ou inférieure à 0,5 µm.

3. Méthode selon l'une des revendications 1 et 2 pour laquelle :
• une seule matière minérale ou deux ou trois matières minérales sont mises en oeuvre ; ou pour laquelle
• la matière minérale est synthétique ou d'origine naturelle, de préférence choisie parmi les carbonates de métal alcalino-terreux, de préférence carbonate de calcium naturel ou précipité, carbonate de strontium, carbonate de magnésium, carbonate de baryum, dolomie, kaolin, dioxyde de titane, talc, chaux, sulfate de calcium, sulfate de baryum.

4. Méthode selon l'une des revendications 1 à 3 pour laquelle la réaction de polymérisation est réalisée :
• dans l'eau, dans un solvant, seul ou en mélange avec de l'eau, notamment un solvant alcoolique, en particulier alcool isopropylique ; ou
• en présence d'au moins un composé générateur de radicaux, de préférence d'un composé générateur de radicaux choisi parmi peroxyde d'hydrogène, persulfate de sodium, persulfate de potassium, persulfate d'ammonium, hydroperoxyde d'alkyle, hydroperoxyde d'aryle et leurs mélanges ; ou
• en présence d'au moins un autre agent de transfert de chaîne, de préférence d'un agent de transfert de chaîne choisi parmi les sels du dipropionate trithiocarbonate (DPTTC), notamment ses sels de sodium ; alcool isopropylique ; composés mercaptans.

5. Méthode selon l'une des revendications 1 à 4 pour laquelle :
• la première acidité distale de l'acide itaconique est partiellement salifiée et la seconde acidité proximale de l'acide itaconique n'est pas salifiée ; ou
• la première acidité distale de l'acide itaconique est totalement salifiée et la seconde acidité proximale de l'acide itaconique n'est pas salifiée ; ou
• la première acidité distale de l'acide itaconique est totalement salifiée et la seconde acidité proximale de l'acide itaconique est partiellement salifiée.

6. Méthode selon l'une des revendications 1 à 5 pour laquelle le polymère :
• a une masse moléculaire moyenne en poids Mw mesurée par CES ou chromatographie d'exclusion stérique selon la méthode rédigée dans la description inférieure à 20 000 g/mol, de préférence inférieure à 15 000 g/mol, inférieure à 10 000 g/mol, plus préférentiellement inférieure à 5 000 g/mol ou inférieure à 3 000 g/mol ; ou
• a une masse moléculaire moyenne en poids Mw mesurée par CES ou chromatographie d'exclusion stérique selon la méthode rédigée dans la description supérieure à 1 000 g/mol ou supérieure à 1 200 g/mol ; ou
• a un indice de polymolécularité IP inférieur à 4 ou allant de 1,2 à 4 ou de 1,5 à 4 ; de 1,2 à 3 ou de 1,5 à 3 ; de 1,2 à 2,5 ou bien encore de 1,5 à 2,5.

7. Méthode selon l'une des revendications 1 à 6 pour laquelle :
• le polymère d'acide itaconique est partiellement décarboxylé, de préférence 10 % molaire de la seconde acidité sont décarboxylés ou 20 % molaire de la seconde acidité sont décarboxylés ou 30 % molaire de la seconde acidité sont décarboxylés ou 40 % molaire de la seconde acidité sont décarboxylés ou 50 % molaire de la seconde acidité sont décarboxylés ou 60 % molaire de la seconde acidité sont décarboxylés ou 70 % molaire de la seconde acidité sont décarboxylés ou 80 % molaire de la seconde acidité sont décarboxylés ou 90 % molaire de la seconde acidité sont décarboxylés ; ou pour laquelle
• de 5 à 90 % molaire ou de 20 à 85 % molaire ou encore de 50 à 85 % molaire de la seconde acidité du polymère sont décarboxylés ; ou pour laquelle :
• le polymère d'acide itaconique est totalement neutralisé ou neutralisé à 40 % en mol, de préférence neutralisé à 50 % en mol ou à 60 % en mol ou à 70 % en mol ou à 80 % en mol ou à 90 % en mol ou à 95 % en mol ou à 100 % en mol ; ou pour laquelle
• le polymère est neutralisé avec de la soude ou du carbonate de sodium, du bicarbonate de sodium, de préférence de la soude.

8. Méthode selon l'une des revendications 1 à 7 pour laquelle :
• la suspension aqueuse de particules de matière minérale de taille médiane de 1,5 ± 0,15 µm possède une demande cationique mesurée selon la méthode rédigée dans la description inférieure ou égale en valeur absolue à 5 µ-équivalent par g de suspension de particules dans l'eau à une concentration de 65 à 75 % en poids ; ou bien
• la suspension aqueuse de particules de matière minérale de taille médiane de 0,7 ± 0,15 µm possède une demande cationique mesurée selon la méthode rédigée dans la description inférieure ou égale en valeur absolue à 13 µ-équivalent par g de suspension de particules dans l'eau à une concentration de 65 à 75 % en poids.

9. Composition aqueuse comprenant des particules de matière minérale broyée et au moins un polymère définis selon l'une des revendications 1 à 7.

10. Composition selon la revendication 9 :
• dont la suspension aqueuse de particules de matière minérale de taille médiane de 1,5 ± 0,15 µm possède une demande cationique, mesurée selon la méthode de la description, inférieure ou égale en valeur absolue à 5 µ-équivalent par g de suspension de particules dans l'eau à une concentration de 65 à 75 % en poids ; ou bien
• dont la suspension aqueuse de particules de matière minérale de taille médiane de 0,7 ± 0,15 µm possède une demande cationique, mesurée selon la méthode de la description, inférieure ou égale en valeur absolue à 13 µ-équivalent par g de suspension de particules dans l'eau à une concentration de 65 à 75 % en poids.

11. Composition selon l'une des revendications 9 et 10 comprenant également au moins une matière cellulosique, de préférence des fibres ou des fibrilles de matière cellulosique, et éventuellement au moins un additif, de préférence un additif choisi parmi un agent de collage de la matière cellulosique, un agent de rétention des particules de matière minérale.

12. Méthode de préparation d'une composition de charge de masse papetière ou d'une composition de sauce de couchage papetière comprenant le broyage, en présence d'eau, d'au moins une matière minérale en présence d'au moins un polymère obtenu :
(a) par une réaction de polymérisation radicalaire en présence d'hypophosphite de sodium, à une température supérieure à 50°C, d'un sel partiel de sodium d'acide itaconique et décarboxylation partielle du polymère obtenu puis
(b) neutralisation partielle ou totale du polymère décarboxylé résultant de l'étape (a), au moyen d'un dérivé comprenant du sodium,
pour former une suspension aqueuse de particules de matière minérale.

13. Utilisation comme agent d'aide au broyage de particules de matière minérale, d'au moins un polymère obtenu :
(a) par une réaction de polymérisation radicalaire en présence d'hypophosphite de sodium, à une température supérieure à 50°C, d'un sel partiel de sodium d'acide itaconique et décarboxylation partielle du polymère obtenu puis
(b) neutralisation partielle ou totale du polymère décarboxylé résultant de l'étape (a), au moyen d'un dérivé comprenant du sodium.

14. Utilisation selon la revendication 13 pour laquelle le polymère est obtenu selon l'une des méthodes rédigées dans l'une des revendications 1 à 7.

15. Méthode de préparation de papier comprenant l'utilisation d'une composition selon l'une des revendications 9 à 11 ; de préférence méthode pour laquelle la quantité d'agent cationique, notamment d'agent floculant cationique ou la quantité d'agent coagulant cationique ou d'agent cationique de rétention de charge minérale, est réduite.

## Patentansprüche

1. Verfahren zur Herstellung von Mineralstoffpartikeln, einschließlich Mahlen, in Gegenwart von Wasser, aus mindestens einem Mineralstoff in Gegenwart mindestens eines Polymers, das wie folgt hergestellt wird:
(a) durch eine radikalische Polymerisationsreaktion in Gegenwart von Natriumhypophosphit, bei einer Temperatur von über 50 °C, eines partiellen Natriumsalzes der Itaconsäure und eine partielle Decarboxylierung des hergestellten Polymers sowie anschließend
(b) eine partielle oder vollständige Neutralisierung des decarboxylierten Polymers aus Schritt (a) mit einem natriumhaltigen Derivat.

2. Verfahren nach Anspruch 1, wobei die Partikel eine durch ihren mittleren gewichtsbezogenen Durchmesser d₅₀ definierte und laut dem beschreibungsgemäßen Verfahren gemessene Größe von weniger als 50 µm oder eine durch ihren mittleren gewichtsbezogenen Durchmesser d₅₀ definierte und laut dem beschreibungsgemäßen Verfahren gemessene Größe von 0,05 bis 50 µm oder eine durch ihren mittleren gewichtsbezogenen Durchmesser d₅₀ definierte und laut dem beschreibungsgemäßen Verfahren gemessene Größe von weniger als 10 µm, vorzugsweise weniger als 5 µm oder 2 µm, noch mehr bevorzugt weniger als 1 µm oder weniger als 0,5 µm, haben.

3. Verfahren nach einem der Ansprüche 1 bis 2, wobei:
• ausschließlich ein einziger Mineralstoff bzw. zwei oder drei Mineralstoffe umgesetzt werden, oder wobei
• der Mineralstoff synthetischen oder natürlichen Ursprungs ist, vorzugsweise ausgewählt aus Erdalkalimetallcarbonaten, bevorzugt aus natürlichem oder ausgefälltem Calciumcarbonat, Strontiumcarbonat, Magnesiumcarbonat, Bariumcarbonat, Dolomit, Kaolin, Titandioxid, Talk, Kalkstein, Calciumsulfat, Bariumsulfat.

4. Verfahren nach einem der Ansprüche 1 bis 3, wobei die Polymerisationsreaktion wie folgt durchgeführt wird:
• in Wasser, in einem Lösungsmittel, allein oder im Gemisch mit Wasser, insbesondere in einem alkoholischen Lösungsmittel, vor allem Isopropylalkohol, oder
• in Gegenwart mindestens einer radikalbildenden Verbindung, vorzugsweise einer radikalbildenden Verbindung ausgewählt aus Wasserstoffperoxid, Natriumpersulfat, Kaliumpersulfat, Ammoniumpersulfat, Alkylhydroperoxid, Arylhydroperoxid und deren Mischungen, oder
• in Gegenwart mindestens eines anderen Kettenübertragungsmittels, vorzugsweise eines Kettenübertragungsmittels ausgewählt aus den Salzen von Dipropionattrithiocarbonat (DPTTC), insbesondere dessen Natriumsalzen, Isopropylalkohol, Mercaptan-Verbindungen.

5. Verfahren nach einem der Ansprüche 1 bis 4, wobei:
• die erste distale Azidität der Itaconsäure partiell in ein Salz überführt wird und die zweite proximale Azidität der Itaconsäure nicht in ein Salz überführt wird, oder
• die erste distale Azidität der Itaconsäure vollständig in ein Salz überführt wird und die zweite proximale Azidität der Itaconsäure nicht in ein Salz überführt wird, oder
• die erste distale Azidität der Itaconsäure vollständig in ein Salz überführt wird und die zweite proximale Azidität der Itaconsäure partiell in ein Salz überführt wird.

6. Verfahren nach einem beliebigen der Ansprüche 1 bis 5, wobei das Polymer:
• eine gewichtsgemittelte Molekülmasse Mw, gemessen mittels Größenausschlusschromatographie (SEC) oder sterischer Ausschlusschromatographie laut dem beschreibungsgemäßen Verfahren, von weniger als 20.000 g/mol, vorzugsweise weniger als 15.000 g/mol, weniger als 10.000 g/mol, noch mehr bevorzugt weniger als 5.000 g/mol oder weniger als 3.000 g/mol aufweist, oder
• eine gewichtsgemittelte Molekülmasse Mw, gemessen mittels Größenausschlusschromatographie (SEC) oder sterischer Ausschlusschromatographie laut dem beschreibungsgemäßen Verfahren, von mehr als 1.000 g/mol oder mehr als 1.200 g/mol hat, oder
• einen Polymolekularitätsindex IP von weniger als 4 oder von 1,2 bis 4 oder von 1,5 bis 4, von 1,2 bis 3 oder von 1,5 bis 3, von 1,2 bis 2,5 oder von 1,5 bis 2,5 besitzt.

7. Verfahren nach einem der Ansprüche 1 bis 6, wobei:
• das Polymer aus Itaconsäure partiell decarboxyliert ist, vorzugsweise sind 10 Mol-% der zweiten Azidität decarboxyliert oder 20 Mol-% der zweiten Azidität decarboxyliert oder 30 Mol-% der zweiten Azidität decarboxyliert oder 40 Mol-% der zweiten Azidität decarboxyliert oder 50 Mol-% der zweiten Azidität decarboxyliert oder 60 Mol-% der zweiten Azidität decarboxyliert oder 70 Mol-% der zweiten Azidität decarboxyliert oder 80 Mol-% der zweiten Azidität decarboxyliert oder 90 Mol-% der zweiten Azidität decarboxyliert, oder wobei
• 5 bis 90 Mol-% oder 20 bis 85 Mol-% oder 50 bis 85 Mol-% der zweiten Azidität des Polymers decarboxyliert sind, oder wobei:
• das Polymer aus Itaconsäure vollständig neutralisiert oder zu 40 Mol-%, vorzugsweise zu 50 Mol-% oder zu 60 Mol-% oder zu 70 Mol-% oder zu 80 Mol-% oder zu 90 Mol-% oder zu 95 Mol-% oder zu 100 Mol-%, neutralisiert ist, oder wobei
• das Polymer mit Natron oder Natriumcarbonat, Natriumbicarbonat, vorzugsweise Natron, neutralisiert ist.

8. Verfahren nach einem der Ansprüche 1 bis 7, wobei:
• die wässrige Suspension aus Mineralstoffpartikeln mit einer mittleren Größe von 1,5 ± 0,15 µm einen kationischen Bedarf besitzt, wie laut dem beschreibungsgemäßen Verfahren gemessen, der in Absolutwerten kleiner oder gleich 5 qEq/g Partikelsuspension in Wasser bei einer Konzentration von 65 bis 75 Gew.-% ist, oder
• die wässrige Suspension aus Mineralstoffpartikeln mit einer mittleren Größe von 0,7 ± 0,15 µm einen kationischen Bedarf besitzt, wie laut dem beschreibungsgemäßen Verfahren gemessen, der in Absolutwerten kleiner oder gleich 13 qEq/g Partikelsuspension in Wasser bei einer Konzentration von 65 bis 75 Gew.-% ist.

9. Wässrige Zusammensetzung, bestehend aus Partikeln aus gemahlenem Mineralstoff und mindestens einem Polymer, die nach einem der Ansprüche 1 bis 7 definiert sind.

10. Zusammensetzung nach Anspruch 9, wobei:
• die wässrige Suspension aus Mineralstoffpartikeln mit einer mittleren Größe von 1,5 ± 0,15 µm einen kationischen Bedarf besitzt, wie laut dem beschreibungsgemäßen Verfahren gemessen, der in Absolutwerten kleiner oder gleich 5 qEq/g Partikelsuspension in Wasser bei einer Konzentration von 65 bis 75 Gew.-% ist, oder
• die wässrige Suspension aus Mineralstoffpartikeln mit einer mittleren Größe von 0,7 ± 0,15 µm einen kationischen Bedarf besitzt, wie laut dem beschreibungsgemäßen Verfahren gemessen, der in Absolutwerten kleiner oder gleich 13 qEq/g Partikelsuspension in Wasser bei einer Konzentration von 65 bis 75 Gew.-% ist.

11. Zusammensetzung nach einem der Ansprüche 9 bis 10, die ebenfalls mindestens ein Cellulosematerial, vorzugsweise Fasern oder Fibrillen eines Cellulosematerials, und eventuell mindestens einen Zusatzstoff umfasst, vorzugsweise einen Zusatzstoff ausgewählt aus einem Klebemittel des Cellulosematerials, einem Retentionsmittel der Mineral stoffpartikel.

12. Verfahren zur Herstellung einer Zusammensetzung für einen Papiermassenfüllstoff oder einer Zusammensetzung für eine Streichmasse in der Papierindustrie, einschließlich Mahlen, in Gegenwart von Wasser, aus mindestens einem Mineralstoff in Gegenwart mindestens eines Polymers, das wie folgt hergestellt wird:
(a) durch eine radikalische Polymerisationsreaktion in Gegenwart von Natriumhypophosphit, bei einer Temperatur von über 50 °C, eines partiellen Natriumsalzes der Itaconsäure und eine partielle Decarboxylierung des hergestellten Polymers sowie anschließend
(b) eine partielle oder vollständige Neutralisierung des decarboxylierten Polymers aus Schritt (a) mit einem natriumhaltigen Derivat,
zur Bildung einer wässrigen Suspension aus Mineralstoffpartikeln.

13. Verwendung von Mineralstoffpartikeln als Mahlhilfsmittel aus mindestens einem Polymer, das wie folgt hergestellt wird:
(a) durch eine radikalische Polymerisationsreaktion in Gegenwart von Natriumhypophosphit, bei einer Temperatur von über 50 °C, eines partiellen Natriumsalzes der Itaconsäure und eine partielle Decarboxylierung des hergestellten Polymers sowie anschließend
(b) eine partielle oder vollständige Neutralisierung des decarboxylierten Polymers aus Schritt (a) mit einem natriumhaltigen Derivat.

14. Verwendung nach Anspruch 13, wobei das Polymer laut einem der Verfahren nach einem der Ansprüche 1 bis 7 hergestellt wird.

15. Verfahren zur Papierherstellung, einschließlich der Verwendung einer Zusammensetzung nach einem der Ansprüche 9 bis 11, vorzugsweise ein Verfahren, bei dem die Menge des kationischen Mittels, insbesondere des kationischen Flockungsmittels, oder die Menge des kationischen Koagulationsmittels oder des kationischen Retentionsmittels für den Mineralfüllstoff reduziert ist.

## Claims

1. Method of producing mineral material particles comprising grinding, in the presence of water, of at least one mineral material in the presence of at least one polymer obtained:
(a) by a radical polymerization reaction in the presence of sodium hypophosphite, at a temperature above 50°C, of a partial sodium salt of itaconic acid and partial decarboxylation of the polymer obtained and
(b) partial or total neutralization of the decarboxylated polymer resulting from step (a), using a derivative comprising sodium.

2. Method according to claim 1, for which the particles have a size, defined by their median diameter d₅₀ by weight and measured according to the method of the description, less than 50 µm or a size, defined by their median diameter d₅₀ by weight and measured according to the method of the description, ranging from 0.05 to 50 µm or a size, defined by their median diameter d₅₀ by weight and measured according to the method of the description, less than 10 µm, preferably less than 5 µm or 2 µm, more preferably less than 1 µm or less than 0.5 µm.

3. Method according to one of claims 1 and 2 for which:
• only one mineral material or two or three mineral materials are used; or for which
• the mineral material is synthetic or of natural origin, preferably selected from alkaline earth metal carbonates, preferably calcium carbonate natural or precipitated, strontium carbonate, magnesium carbonate, barium carbonate, dolomite, kaolin, titanium dioxide, talc, lime, calcium sulphate, barium sulphate.

4. Method according to one of claims 1 to 3 for which the polymerization reaction is carried out:
• in water, in a solvent, alone or in a mixture with water, in particular an alcoholic solvent, especially isopropyl alcohol; or
• in the presence of at least one radical generating compound, preferably a radical generating compound selected from hydrogen peroxide, sodium persulfate, potassium persulfate, ammonium persulfate, alkyl hydroperoxide, aryl hydroperoxide and their mixtures; or
• in the presence of at least one other chain transfer agent, preferably a chain transfer agent selected from the salts of dipropionate trithiocarbonate (DPTTC), especially its sodium salts; isopropylic alcohol; mercaptan compounds.

5. Method according to one of claims 1 to 4 wherein:
• the first distal acidity of itaconic acid is partially salified and the second proximal acidity of itaconic acid is not salified; or
• the first distal acidity of itaconic acid is totally salified and the second proximal acidity of itaconic acid is not salified; or
• the first distal acidity of itaconic acid is totally salified and the second proximal acidity of itaconic acid is partially salified.

6. Method according to one of claims 1 to 5 for which the polymer:
• has a weight average molecular mass M_{W} measured by SEC or size exclusion chromatography according to the method written in the description less than 20,000 g/mol, preferably less than 15,000 g/mol, less than 10,000 g/mol, more preferably less than 5,000 g/mol or less than 3,000 g/mol; or
• has a weight average molecular mass M_{W} measured by SEC or size exclusion chromatography according to the method written in the description greater than 1,000 g/mol or greater than 1,200 g/mol; or
• has a PI polymolecularity index of less than 4 or 1.2 to 4 or 1.5 to 4; from 1.2 to 3 or 1.5 to 3; from 1.2 to 2.5 or even from 1.5 to 2.5.

7. Method according to one of claims 1 to 6 wherein:
• the itaconic acid polymer is partially decarboxylated, preferably 10 mol% of the second acidity are decarboxylated or 20 mol% of the second acidity are decarboxylated or 30 mol% of the second acidity are decarboxylated or 40 mol% of the second acidity are decarboxylated or 50 mol% of the second acidity are decarboxylated or 60 mol% of the second acidity are decarboxylated or 70 mol% of the second acidity are decarboxylated or 80 mol% of the second acidity are decarboxylated or 90 mol% of the second acidity are decarboxylated; or for which
• from 5 to 90 mol% or from 20 to 85 mol% or from 50 to 85 mol% of the second acidity of the polymer are decarboxylated ; or for which:
• the itaconic acid polymer is totally neutralized or neutralized to 40 mol %, preferably neutralized to 50 mol % or 60 mol % or 70 mol% or 80 mol % or 90 mol %, or at 95 mol % or 100 mol %; or for which
• the polymer is neutralized with sodium hydroxide or sodium carbonate, sodium bicarbonate, preferably sodium hydroxide.

8. Method according to one of claims 1 to 7 wherein:
• the aqueous suspension of mineral material particles having a median size of 1.5 ± 0.15 µm has a cationic demand measured according to the method written in the description less than or equal in absolute value to 5 µ-equivalent per g of suspension of particles in water at a concentration of 65 to 75% by weight; or
• the aqueous suspension of mineral material particles with a median size of 0.7 ± 0.15 µm has a cationic demand measured according to the method written in the description less than or equal in absolute value to 13 µ-equivalent per g of suspension of particles in water at a concentration of 65 to 75% by weight.

9. Aqueous composition comprising particles of ground mineral material and at least one polymer defined according to one of claims 1 to 7.

10. Composition according to claim 9:
• of which the aqueous suspension of mineral material particles with a median size of 1.5 ± 0.15 µm has a cationic demand, measured according to the method of the description, less than or equal in absolute value to 5 µ-equivalent per g of suspension of particles in water at a concentration of 65 to 75% by weight; or
• of which the aqueous suspension of mineral material particles with a median size of 0.7 ± 0.15 µm has a cationic demand, measured according to the method of the description, less than or equal in absolute value to 13 µ-equivalent per g of suspension of particles in water at a concentration of 65 to 75% by weight.

11. Composition according to one of claims 9 and 10 also comprising at least one cellulosic material, preferably fibres or fibrils of cellulosic material, and optionally at least one additive, preferably an additive selected from a cellulosic material bonding agent, a retention agent for particles of mineral material.

12. Method of producing a paper-mass-loading composition or a paper-coating colour composition comprising grinding, in the presence of water, at least one mineral material in the presence of at least one polymer obtained:
(a) by a radical polymerization reaction in the presence of sodium hypophosphite, at a temperature above 50°C, of a partial sodium salt of itaconic acid and partial decarboxylation of the polymer obtained then
(b) partial or total neutralization of the decarboxylated polymer resulting from step (a), using a derivative comprising sodium,
to form an aqueous suspension of particles of mineral material.

13. Use as grinding aid for particles of mineral material, of at least one polymer obtained:
(a) by a radical polymerization reaction in the presence of sodium hypophosphite, at a temperature above 50°C, of a partial sodium salt of itaconic acid and partial decarboxylation of the polymer obtained then
(b) partial or total neutralization of the decarboxylated polymer resulting from step (a), using a derivative comprising sodium.

14. Use according to claim 13 for which the polymer is obtained according to one of the methods written in one of the claims 1 to 7.

15. Method of producing paper comprising using a composition according to one of claims 9 to 11, preferably method for which the quantity of cationic agent, especially cationic flocculant or the amount of cationic coagulant or mineral filler retention cationic agent, is reduced.
